# EUROPÄISCHE PATENTANMELDUNG

(11) **EP 1 214 874 A1**
(43) Veröffentlichungstag der Anmeldung: **19.06.2002**
(21) Anmeldenummer: 01129054.1
(22) Anmeldetag: 07.12.2001
(51) Int. Cl.: A01F 15/07

(54) **Rundballenpresse**

(30) Priorität: 18.12.2000 DE 10063121
(71) Anmelder: DEERE & COMPANY, Moline, Illinois 61265-8098 (US)
(72) Erfinder: Lucand, Philippe, 70120 Melin (FR); Viaud, Jean, 70100 Gray (FR)
(74) Vertreter: Magin, Ludwig Bernhard

(57) **Zusammenfassung**

2.1. Bekannte Rundballenpressen in Riemen- und Rollenbauweise weisen einen schwenkbaren Träger auf, auf dem wenigstens zwei Rollen gelagert sind, wobei sich die Riemen durch einen Spalt zwischen beiden Rollen hindurch erstrecken und somit den Träger bei zunehmender Größe des Rundballens verstellen. Dabei stellt sich das Problem, daß die Dichte des Rundballens noch nicht ausreichend hoch ist bzw. der Rundballen einen erhöhten Rollwiderstand aufweist.
2.2. Es wird eine Rundballenpresse (10) vorgeschlagen, bei der wenigstens drei Walzen (34) auf einem Träger (32) vorgesehen sind und der Träger (32) um eine Schwenkachse (66) beweglich ist, die sich zwischen den endseitigen Walzen (34) befindet.
2.3. Rundballenpressen (10) werden in der Landwirtschaft eingesetzt.

## Beschreibung

Die Erfindung betrifft eine Rundballenpresse mit einem Preßraum, der von wenigstens einem endlosen Zugmittel und von Walzen umgeben ist, wobei wenigstens zwei Walzen auf einem schwenkbaren Träger angeordnet sind und das Zugmittel über eine der Walzen verläuft.

Die DE-A1-198 10 074 offenbart eine Rundballenpresse mit einem Preßraum, dessen Größe dadurch größenvariabel ist, daß Riemen nachgiebig auf Rollen gelagert sind, wobei die Riemen zwischen zwei an den Seiten eines Einlasses gelegenen Walzen eine Schlaufe bilden, in der sich der Preßraum bildet. Oberhalb des Einlasses ist ein zweiarmiger Träger vorgesehen, der um eine Drehachse einer unteren Walze schwenkbar ist. Mit wachsendem Ballendurchmesser wird eine mittlere Walze von dem Preßraum weggedrückt, wodurch eine dritte und obere Walze die Riemen um ein gewisses Maß spannt und dadurch die Dichte des Rundballens erhöht.

Aus der DE-A1-198 51 470 geht eine vergleichbare Anordnung zum Spannen der Riemen hervor, wobei allerdings nur eine Walze auf einem schwenkbaren Träger angeordnet ist und die Schwenkbewegung des Trägers von dem Spannarm der Riemen gesteuert wird.

Gemäß der EP-A1-0 339 730 ist eine Preßkammer von Riemen und Walzen umgeben, wobei vier Walzen auf einem schwenkbaren Träger angeordnet sind und die Preßkammer teilweise umfassen. Die Riemen erstrecken sich durch einen Spalt zwischen einer Schwenkachse des Trägers am weitesten und einer dieser benachbarten Walze. Auf diese Weise wird ebenfalls eine Koppelung der die Preßkammer umgebenden Wände erreicht und eine hohe Spannung auf den Rundballen aufgebracht.

Das der Erfindung zugrunde liegende Problem wird darin gesehen, daß die Zufuhr von neuem Preßgut in den Preßraum bei hoher Preßdichte schwierig ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise liegt der Rundballen stets an zwei Walzen und erfährt eine erhebliche Verdichtung. Da der Träger nicht um eine endseitige Walze bzw. deren Drehachse schwenkt, ergibt sich zudem eine Gegenbewegung aus der Bewegung einer endseitigen Walze, die dazu führt, daß der Rundballen von dem Einlaß weggedrückt wird, wodurch die weitere Zufuhr von Erntegut erleichtert wird. Dadurch, daß das Zugmittel um die obere Walze, die weit von dem Einlaß weg liegt, gelegen ist, bleiben wenigstens zwei weitere Walzen frei auf denen sich der Rundballen mit einem Teil seines Gewichts abstützen kann. Als Zugmittel kann sowohl ein Stabkettenförderer, als auch ein einziges Förderband, aber auch eine Vielzahl von nebeneinander gelegenen Riemen verwendet werden. Die Schwenkachse wird entsprechend den geometrischen Erfordernissen mittig oder außermittig gesetzt.

Eine einfache Bauweise der Lagerung des Trägers ergibt sich daraus, daß die Drehachse der mittleren Walze zugleich die Schwenkachse des Trägers darstellt. Z. B. kann der Träger mittels Gleit- oder Rollenlagern auf der Welle oder auf Lagerstummeln der mittleren Walze gelagert werden.

Wenn die Walzen, die mit dem Erntegut in Kontakt geraten, einen großen Durchmesser aufweisen, reduzieren sie den Rollwiderstand des Rundballens in dem Preßraum, so daß insbesondere ein guter Ballenstart gelingt. Hingegen läßt ein geringer Durchmesser der von dem Zugmittel umschlungenen Walze eine kurze Umlenkung des Zugmittels zu und läßt den Raum zwischen benachbarten Riementrumen im wesentlichen frei, so daß es nicht zu Verstopfungen kommt.

Der Rundballen wird nicht gewalkt, wenn die Kontaktfläche der Walzen auf der dem Preßraum zugelegenen Seite einer Krümmung folgt, die im wesentlichen dem Umfang des fertigen Ballens entspricht. Diese Krümmung oder Bogen kann auf verschiedene Weise erreicht werden, wobei es am einfachsten ist, wenn die Drehachsen gleich großer Walzen auf einem Bogen des Trägers gelegen sind.

Die Spannung des Zugmittels kann zusätzlich während der Ballenbildung dadurch erhöht werden, daß eine Walze auf einem Hebelarm ein Trum auslenkt und dieses einen zusätzlichen Weg zurücklegen muß, der eine weitere Spannung einer Feder und somit eine Erhöhung der Oberflächendichte bewirkt.

Wenn ein Rotor, z. B. eines Schneidwerks oder auch ein separater Rotor ohne Schneidfunktion, so angeordnet ist, daß er teilweise in den Einlaß hineinragt, führt dies sowohl zu einer sicheren Gutzufuhr als auch zum problemlosen Start des Wickelvorgangs.

Die Zufuhr des Ernteguts mittels eines oberschlächtig fördernden Rotors bewirkt eine störungsfreie Zufuhr des Ernteguts in den Preßraum.

Der Rotor wirkt zugleich als Schneidrotor, wenn er mit oberhalb von ihm angeordneten Messern zusammenarbeitet.

Mehrere parallel zueinander verlaufende Riemen bilden ein optimales Zugmittel, weil sie sich unterschiedlich ausdehnen können, weil sie gegenüber Stabkettenförderern leichter sind und weil sie Zwischenräume belassen, durch die eingezwängtes Erntegut entweichen kann.

Zwei Satz Zugmittel haben den Vorteil, daß jedes Zugmittel kürzer ausgeführt werden kann und bei Schäden geringere Wartungskosten anfallen. Es ist zudem einfacher, zwei Zugmittel unabhängig voneinander über einige Walzen und Umlenkrollen zu führen, als ein Zugmittel über alle.

In der Zeichnung sind zwei nachfolgend näher beschriebene Ausführungsbeispiele der Erfindung dargestellt. Es zeigt:
- Fig. 1: eine Rundballenpresse nach einem ersten Ausführungsbeispiel und einer Anordnung von drei Walzen auf einem Träger mit einem Preßraum beim Preßbeginn,
- Fig. 2: die Rundballenpresse nach Figur 1 mit einem Preßraum beim Preßende,
- Fig. 3: eine Rundballenpresse nach einem zweiten Ausführungsbeispiel und einer Anordnung von vier Walzen auf einem Träger mit einem Preßraum beim Preßbeginn,
- Fig. 4: die Rundballenpresse nach Figur 3 mit einem Preßraum beim Preßende.

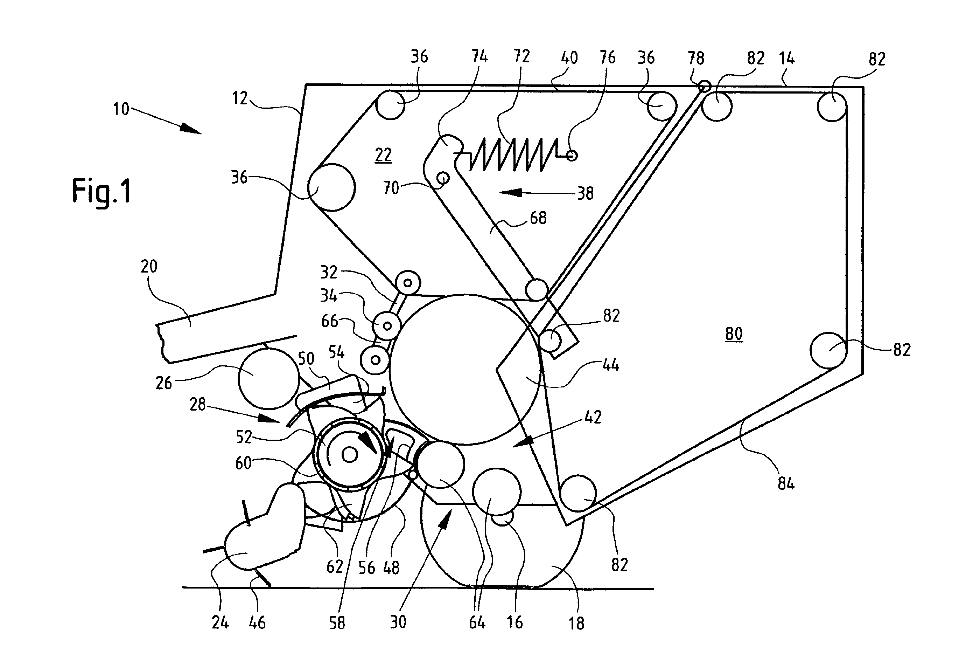

Figur 1 zeigt eine Rundballenpresse 10 mit einem vorderen Rahmen 12 und einer rückwärtigen Klappe 14.

Die Rundballenpresse 10 dient in herkömmlicher Weise dazu, gemähtes Erntegut aufzunehmen und zu Rundballen zu pressen, deren Größe variabel ist.

Der Rahmen 12 enthält eine Achse 16 mit Rädern 18, eine Deichsel 20 und Seitenwände 22 und trägt einen Aufnehmer 24, einen Förderer 26, ein Schneidwerk 28, einen Bodenförderer 30, einen Träger 32 mit Walzen 34, Umlenkrollen 36, eine Spannvorrichtung 38 und Zugmittel 40. Der Rahmen 12 stützt sich mittels der Achse 16 und der Räder 18 auf dem Boden ab, so daß die Rundballenpresse 10 von einem nicht gezeigten Zugfahrzeug über ein Feld gezogen werden kann.

Die Deichsel 20 ist mit dem Rahmen 12 starr, nachgiebig oder verstellbar verbunden und dient dem Anschluß an das Zugfahrzeug. Die Seitenwände 22 sind starr auf dem Rahmen 12 befestigt und begrenzen einen Preßraum 42 für einen Rundballen 44 seitlich.

Der Aufnehmer 24 ist in herkömmlicher Weise als eine Pick-Up ausgebildet, die die gleiche oder eine größere Breite als der Preßraum 42 aufweist. Der Aufnehmer 24 nimmt mit oberschlächtig fördernden Zinken 46 Erntegut vom Boden auf und bewegt es entlang einer nicht näher bezeichneten Förderfläche zu dem Schneidwerk 28, von wo aus es in den Preßraum 42 eingespeist wird.

Der Förderer 26 arbeitet unterschlächtig und ist als Rotor ausgebildet, der dabei hilft, das von dem Aufnehmer 24 herangeführte Gut in das Schneidwerk 28 einzuspeisen. Der Förderer 26 kann eine glatte Oberfläche aufweisen oder mit Mitnehmern, Zinken, Zähnen, Rippen, Schnecken oder dergleichen besetzt sein.

Das Schneidwerk 28 enthält einen Boden 48, einen Deckel 50, einen Rotor 52, Messer 54 und Abstreifer 56, wie dies an sich bekannt ist. Das Schneidwerk 28 ist für die Erfindung nicht wichtig, sondern nur bei diesem Ausführungsbeispiel zusätzlich mit angeführt; insbesondere können die Messer 54 entfallen, so daß der Rotor 52 als ein einfacher Förderer wirkt. Wenn das Schneidwerk 28 vorhanden ist, dient es dazu, von dem Aufnehmer 24 herangeführtes Gut zu zerkleinern, so daß es in dem Preßraum 42 besser verdichtet werden kann.

Der Boden 48 erstreckt sich zwischen dem Aufnehmer 24 und dem Bodenförderer 30 und nimmt eine Krümmung ein, die im wesentlichen dem Radius des Rotors 52 folgt.

Der Deckel 50 erstreckt sich mit gleicher Krümmung zwischen dem Förderer 26 und dem Träger 32, bzw. einer an seinem unteren Endbereich angeordneten Walze 34. Stromaufwärts des Rotors 52 bilden der Boden 48 und der Deckel 50 eine Aufnahmeöffnung und stromabwärts von ihm bilden sie einen Einlaß 58 des Preßraums 42, der zugleich von der unteren Walze 34 und dem Bodenförderer 30 begrenzt wird. Der Einlaß 58 befindet sich beim Blick auf die Rundballenpresse 10 von links im ersten Quadranten des Rotors 52 und somit im wesentlichen seitlich von ihm.

Der Rotor 52 weist ein Zentralrohr 60 und nachlaufend gekrümmte auf das Zentralrohr 60 aufgesetzte Mitnehmer 62 auf. Das Zentralrohr 60 wird mittels eines nicht gezeigten Antriebs im Uhrzeigerdrehsinn angetrieben, wenn man die Rundballenpresse 10 von der linke Seite betrachtet. Die Mitnehmer 62 sind im wesentlichen dreiecksförmig und reichen mit einer Spitze bis nahezu an den Boden 48 und den Deckel 50. Insgesamt sind fünf Reihen Mitnehmer 62 in Schraubenlinienform auf das Zentralrohr 60 aufgeschweißt oder aufgeschraubt, wobei die Mitnehmer 62 in der Axialrichtung des Rotors 52 einen Abstand zueinander aufweisen. Der Durchmesser des Rotors 52 ist von beträchtlicher Größe und nimmt ca. 0,6 m ein.

Die Messer 54 sind in herkömmlicher Weise ausgebildet und können vorzugsweise in verschiedenen Stellungen arretiert werden und bei Überlast ausweichen. Die Messer 54 erstrecken sich durch nicht sichtbare Schlitze im Deckel 50 in alle oder einen Teil der Zwischenräume zwischen den Mitnehmern 62. Die Messer 54 werden von einem gemeinsamen verstellbaren aber nicht gezeigten Träger gehalten und können sich in einer Endstellung bis zu dem Zentralrohr 60 und in einer anderen Endstellung bis an die Innenkante des Deckels 50 erstrecken. Wie bereits erwähnt, können die Messer 54 auch entfallen, so daß der Rotor 52 nicht als schneidender, sondern nur als fördernder Rotor 52 wirkt. Die Messer 54 befinden sich oberhalb des Rotors 52 und stromaufwärts des Einlasses 58.

Die Abstreifer 56 befinden sich stromabwärts der Messer 54 und ebenfalls in den Zwischenräumen zwischen den Mitnehmern 62. Eine Oberkante der Mitnehmer 62 verläuft zu der Klappe 14 hin leicht abfallend und geringfügig gebogen. Die Abstreifer 56 grenzen einerseits an das Zentralrohr 60 und andererseits an den Bodenförderer 30 an, wobei sie deren Kontur sehr eng folgen. Die Lage der Abstreifer 56 ist so gewählt, daß sich der Rundballen 44 in der Anfangsphase der Ballenbildung teilweise auf ihnen abstützen kann und verschließen somit den Einlaß 58 zu einem gewissen Teil.

Der Bodenförderer 30 wird in diesem Ausführungsbeispiel von zwei Rollen 64 gebildet, die ortsfest aber drehbar in dem Rahmen 12 bzw. dessen Seitenwänden 22 gelagert sind und einen relativ großen Durchmesser aufweisen. Die rückwärtige Rolle 64 liegt tiefer als die vordere Rolle 64 und befindet sich unmittelbar oberhalb der Achse 16. Auf den beiden Rollen 64 ergibt sich eine abfallende Förderfläche. Anstatt der beiden Rollen 64 könnten auch mehr oder weniger Rollen, ein Kettenförderer, ein Bandförderer oder dergleichen verwendet werden. Der Bodenförderer 30 begrenzt den Preßraum 42 in seinem unteren Bereich auf einem Teil seines Umfangs. Die Rollen 64 sind vorzugsweise angetrieben.

Der Träger 32 ist in der Art einer biegesteifen Schiene ausgebildet und doppelt vorgesehen, nämlich an jeder Seitenwand 22, wobei nicht gezeigte aber hinlänglich bekannte Versteifungselemente zwischen beiden vorgesehen sind. Der Träger 32 ist um eine sich quer zu der Fahrtrichtung der Rundballenpresse 10 verlaufende, horizontale Schwenkachse 66 in einer vertikalen Ebene schwenkbar. Die Schwenkachse 66 befindet sich zwischen den Enden des Trägers 32 und in diesem Ausführungsbeispiel ungefähr in seiner Mitte, so daß er sich wie eine Wippe bewegen kann.

Die Walzen 34 lassen sich unterscheiden in eine untere, eine mittlere und eine obere Walze 34, wenn man von drei Walzen 34 ausgeht, was jedoch nicht zwingend ist. Die Walzen 34 sind drehbar zwischen den beiden Trägern 32 aufgenommen und erstrecken sich über die gesamte Breite des Preßraums 42. Die Anordnung ist derart gewählt, daß dann, wenn der Rundballen 44 im wesentlichen seine volle Größe erreicht hat, die dem Rundballen 44 zugelegenen Flächen bzw. Kanten auf einer gekrümmten Fläche liegen, die dem Durchmesser des Rundballens 44 folgt. Die Durchmesser der unteren und der mittleren Walze 34 sind größer als der der oberen Walze 34. Die untere Walze 34 befindet sich stets nahe an der rückwärtigen Kante des Deckels 50. Die Drehachse der mittleren Walze 34 bildet zugleich die Schwenkachse 66, was jedoch nicht zwingend ist und in anderen Ausführungsbeispielen anders gelöst werden kann. Insbesondere kann die Schwenkachse 66 nach unten, oben, vorne oder hinten versetzt sein. Zwischen der mittleren und der oberen Walze 34 besteht ein Spalt, durch den das Zugmittel 40 verläuft. Die untere und die mittlere Walze 34 bilden unmittelbar einen Teil der Wandung des Preßraums 42 und werden von dem darin gepreßten Gut direkt beaufschlagt.

Mehrere Umlenkrollen 36, von denen wenigstens eine angetrieben wird, erstrecken sich zwischen den Seitenwänden 22 und sind teilweise in diesen drehbar und parallel zu den Walzen 34 gelagert. Gemäß der Darstellung in Figur 1 sind vier Umlenkrollen 36 im wesentlichen gemäß den Eckpunkten eines Trapezes angeordnet, die das Zugmittel 40 endlos umlaufen kann. Drei der vier Umlenkrollen 36 sind in den Zwischenwänden 22 ortsfest und eine ist auf der Spannvorrichtung 38 beweglich gelagert.

Die Spannvorrichtung 38 enthält in im wesentlichen bekannter Weise einen Arm 68, ein Lager 70 und einen Kraftspeicher 72.

Der Arm 68 wird von einer massiven Stahlschiene gebildet und ist wie der Träger 32 doppelt ausgeführt, d. h. im Bereich beider Seitenwände 22 vorhanden. Der Arm 68 erstreckt sich nahezu über die gesamte Länge der Seitenwand 22 und ist an dem dem Lager 70 abgelegenen Endbereich mit zwei Umlenkrollen 36 versehen, die in der radialen Richtung einen Abstand zueinander aufweisen. Eine der Umlenkrollen 36 befindet sich in einem von dem Zugmittel 40 umschlossenen Innenraum. Der Arm 68 erstreckt sich an dem dem Lager 70 zugelegenen Endbereich über das Lager 70 hinaus und ist leicht abgewinkelt, um einen Hebelarm 74 zu bilden.

Das Lager 70 nimmt den Arm 68 an dem den Umlenkrollen 36 gegenüberliegenden Endbereich vertikal schwenkbar auf. Hierzu können an jeder Seitenwand 22 jeweils ein separates Lager 70 oder ein sich zwischen den Seitenwänden 22 erstreckendes Lager vorgesehen werden.

Der Kraftspeicher 72 ist in diesem Ausführungsbeispiel von einer Schraubenzugfeder gebildet; stattdessen könnte auch ein Hydraulikzylinder mit Gasdruckspeicher oder Drossel, eine andere Federart, eine Kombination daraus oder dergleichen verwendet werden. Der Kraftspeicher 72 ist einenends an den Hebelarm 74 und anderenends an einem Halter 76 befestigt, der ortsfest an dem Rahmen 12 bzw. der Seitenwand 22 angreift. Normalerweise ist der Kraftspeicher 72 wenigstens geringfügig vorgespannt. Es ist aber auch eine Ausführungsform denkbar, bei der der Widerstand durch den Kraftspeicher 72 veränderbar ist, z. B. mittels einer steuerbaren Drossel, um etwa eine unterschiedliche Verdichtung über dem Durchmesser des Rundballens 44 zu erzeugen, so daß ein sog. Weichkern erreicht wird. Die Wirkungsrichtung des Kraftspeichers 72 ist so gewählt, daß der Arm 68 mit seinen Umlenkrollen 36 stets zu dem Einlaß 58 hin gedrängt wird, d. h. im Sinne eines möglichst kleinen Preßraums 42.

Das Zugmittel 40 ist in diesem Ausführungsbeispiel aus mehreren parallel zueinander verlaufenden schmalen Riemen gebildet, wie dies an sich bekannt ist. Das dem Rahmen 12 zugeordnete Zugmittel 40 ist in sich geschlossen und getrennt von einem in der Klappe 14 vorgesehenen Zugmittel, was jedoch nicht zwingend ist. Vielmehr könnte auch ein einziges Zugmittel 40 in dem Rahmen 12 und der Klappe 14 verwendet werden. Das Zugmittel 40 verläuft beginnend bei der Umlenkrolle 36 auf dem Arm 68 im Uhrzeigerdrehsinn durch den Spalt zwischen der oberen und der mittleren Walze 34 auf dem Träger 32, über eine vordere untere, eine vordere obere und eine rückwärtige obere Umlenkrolle 36 in dem Rahmen 12. Aufgrund des Schwenkvermögens des Arms 68 und des Trägers 32 kann der sich zwischen dem Spalt und der beweglichen Umlenkrolle 36 erstreckende Bereich des Zugmittels 40 ausgelenkt und in der Größe verändert werden. Dieser Bereich stellt einen Teil der Wandung des Preßraums 42 dar und wird direkt von dem Gut in dem Preßraum 42 beaufschlagt.

Der Preßraum 42 ist von variabler Größe und wird umgeben von dem Einlaß 58, den Walzen 34 auf dem Träger 32, dem Teil des Zugmittels 40, der sich zwischen dem Spalt und der beweglichen Umlenkrolle 36, einem Zugmittelabschnitt in der Klappe 14 und dem Bodenförderer 30. An den Stirnseiten wird der Preßraum 42 im wesentlichen von den Seitenwänden 22 geschlossen.

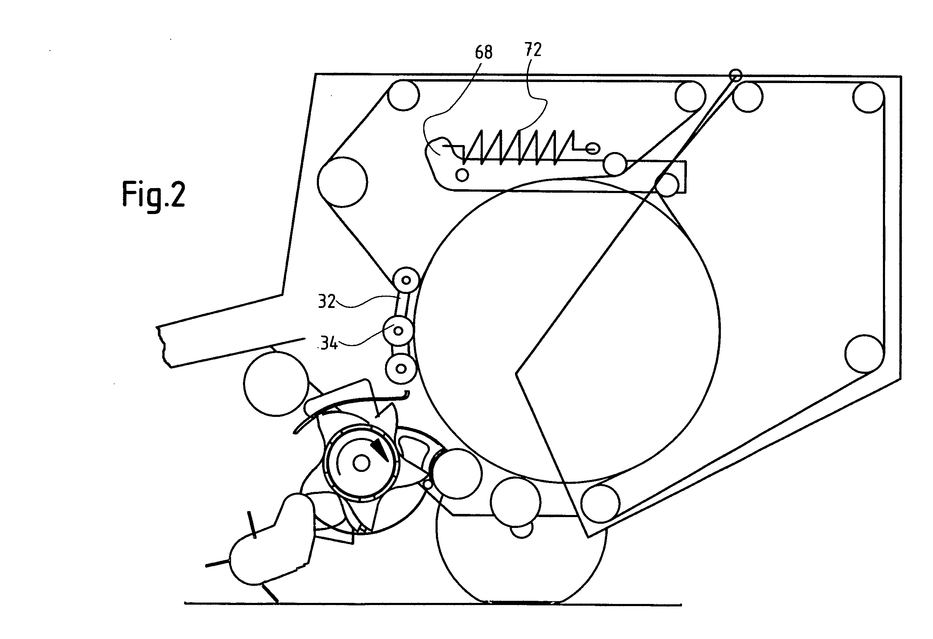

Der Rundballen 44 wird aus Erntegut gebildet, das spiralförmig aufgewickelt wird und letztlich eine Größe erreicht, wie sie in Figur 2 gezeigt ist. Zum Entladen des Rundballens 44 aus dem Preßraum 42 wird die Klappe 14 angehoben, so daß der Rundballen 44 den Bodenförderer 30 hinunter auf den Boden rollen kann. Die Dichte des Rundballens 44 wird durch die Spannung des Zugmittels 40 erreicht, die von dem Kraftspeicher 72 aufgebracht wird.

Die Klappe 14 ist in einem Lager 78 vertikal schwenkbar an den Rahmen 12 angeschlossen, wobei die Schwenkbewegung von nicht gezeigten aber hinlänglich bekannten Hydraulikzylindern hervorgerufen wird. Die Klappe 14 enthält zwei Seitenwände 80, mehrere Umlenkrollen 82 und ein in sich geschlossenes, endloses Zugmittel 84.

Die Seitenwände 80 verlaufen in derselben Ebene wie die Seitenwände 22 des Rahmens 12 und schließen den Preßraum 42 an seinen Stirnseiten ab. Zwischen den Seitenwänden 80 erstrecken sich nicht gezeigte aber bekannte Versteifungselemente.

Die Umlenkrollen 82, in diesem Ausführungsbeispiel vier, sind ortsfest aber drehbar in den Seitenwänden 80 aufgenommen und erstrecken sich parallel zu den Umlenkrollen 36 über die gesamte Breite des Preßraums 42. Die Umlenkrollen 82 befinden sich oben vorne, oben hinten, unten hinten und ganz unten vorne. Die untere vordere Umlenkrolle 82 liegt in unmittelbarer Nachbarschaft zu der rückwärtigen unteren Rolle 64 des Bodenförderers 30. Zwischen der unteren vorderen und der oberen vorderen Umlenkrolle 82 ist eine Umlenkrolle 82 vorgesehen, die von den Armen 68 getragen wird und sich in unmittelbarer Nachbarschaft zu der entsprechenden Umlenkrolle 36 auf den Armen 68 befindet. Die vertikal bewegliche Umlenkrolle 82 lenkt das zwischen der vorderen oberen und der vorderen unteren Umlenkrolle 82 verlaufende Trum des Zugmittels 84 nach vorne in Richtung des Einlasses 58 aus.

Das Zugmittel 84 ist in gleicher Weise ausgeführt wie das Zugmittel 40 in dem Rahmen 12 und verläuft über alle genannten Umlenkrollen 82 in der Klappe 14. Das sich zwischen der beweglichen und der vorderen unteren Umlenkrolle 82 erstreckende Trum des Zugmittels 84 bildet einen in der Länge veränderbaren Teil der Wandung des Preßraums 42.

Nach alledem ergibt sich folgende Funktion der Rundballenpresse 10 gemäß den Figuren 1 und 2.

In einer nicht gezeigten Situation, in der sich der Arm 68 aufgrund der Wirkung des Kraftspeichers 72 in seiner untersten Stellung befindet, nimmt der Träger 32 ungefähr seine in Figur 1 gezeigte Stellung ein und die Trume zwischen der oberen Walze 34 auf dem Träger 32, und der beweglichen Umlenkrolle 36 bzw. der beweglichen Umlenkrolle 82 und der vorderen rückwärtigen Umlenkrolle 82 erstrecken sich im wesentlichen in einer Ebene von vorne oben nach hinten unten unter einer Neigung von ca. 45 Grad. Der Preßraum 42 nimmt in diesem Fall eine Dreiecksform ein, deren Hypothenuse von den beiden vorgenannten Trumen gebildet wird und das nahezu auf einer seiner Spitzen steht. In diesem Fall weist der Preßraum 42 das kleinste Volumen auf.

Zum Beginn des Preßvorgangs wird die Rundballenpresse 10 über ein Feld mit z. B. in Schwaden abgelegtem Erntegut bewegt und das Erntegut mittels des Aufnehmers 24 vom Boden aufgesammelt und dem Schneidwerk 28 zugeführt. Der Rotor 52 fördert das Gut oberschlächtig und gegebenenfalls an den Messern 54 vorbei in den Preßraum 42, wo es in Berührung mit den in gleicher Richtung umlaufenden Trumen der Zugmittel 40 und 84 gelangt. Aufgrund der drehbaren Lagerung und gegebenenfalls des Antriebs der Rollen 64 und Walzen 34 zusammen mit der. packenden Oberfläche der Zugmittel 40, 84 wird das Erntegut bei ausreichender Menge in Drehung versetzt, und zwar entgegen dem Uhrzeigerdrehsinn mit Blick auf die Figuren der Zeichnung. In einer anderen Ausführungsform kann der Rundballen 44 auch im Uhrzeigerdrehsinn aufgewickelt werden.

Mit zunehmender Erntegutmenge erreicht die Rundballenpresse 10 den in Figur 1 dargestellten Betriebszustand, in dem der Arm 68 in geringem Maß gegen die Wirkung des Kraftspeichers 72 nach oben bewegt ist und somit die Trume nach oben auslenkt, so daß sie aus der gemeinsamen Ebene ausscheren und eine stumpfe Dachform einnehmen. Der Träger 32 wird um die Schwenkachse 66 geringfügig entgegen dem Uhrzeigerdrehsinn geschwenkt, so daß sich seine untere Walze 34 in den Preßraum 42 hinein bewegt. Der Rundballen 44 stützt sich in dieser Situation auf der vorderen Rolle 64 des Bodenförderers 30 und auf den Abstreifern 56 ab.

Mit weiter zugeführtem Erntegut erreicht der Rundballen 44 die in Figur 2 gezeigte Größe. In diesem Betriebszustand ist der Arm 68 vollkommen nach oben geschwenkt und der Kraftspeicher 72 vollkommen gespannt, so daß die größtmögliche Dichte auf der Umfangsfläche des Rundballens 44 erreicht wird. Da der Bodenförderer 30 nicht ausweichen kann, baut sich der Rundballen 44 nach oben auf, so daß seine Umfangsfläche auf die obere Walze 34 drückt und den Träger 32 entgegen dem Uhrzeigerdrehsinn um die Schwenkachse 66 schwenkt. Da sich die Schwenkachse 66 zwischen den Enden des Trägers 32 befindet, bewirkt diese Schwenkbewegung, daß sich der untere Endbereich des Trägers 32 mit der unteren Walze 34 in den Preßraum 42 hinein bewegt und dabei den Rundballen 44 nach hinten verlagert, so daß er sich nur noch auf dem Bodenförderer 30 und der vorderen unteren Umlenkrolle 82 in der Klappe 14 abstützt. Da der Rundballen 44 nicht mehr direkt an dem Einlaß 58 vorbeigleitet, kann neues Erntegut leichter in den Preßraum 42 eingespeist werden, und da im Bereich des Trägers 32 drei Walzen 34 auf die Umfangsfläche des Rundballens 44 drücken, wird sowohl eine gute Führung des Rundballens 44 als auch eine hohe Verdichtung erreicht.

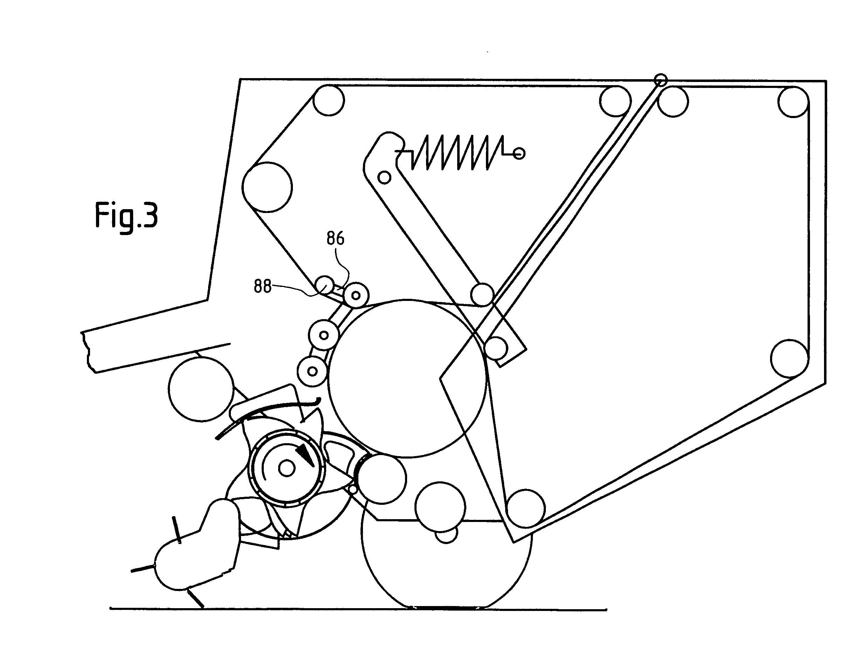

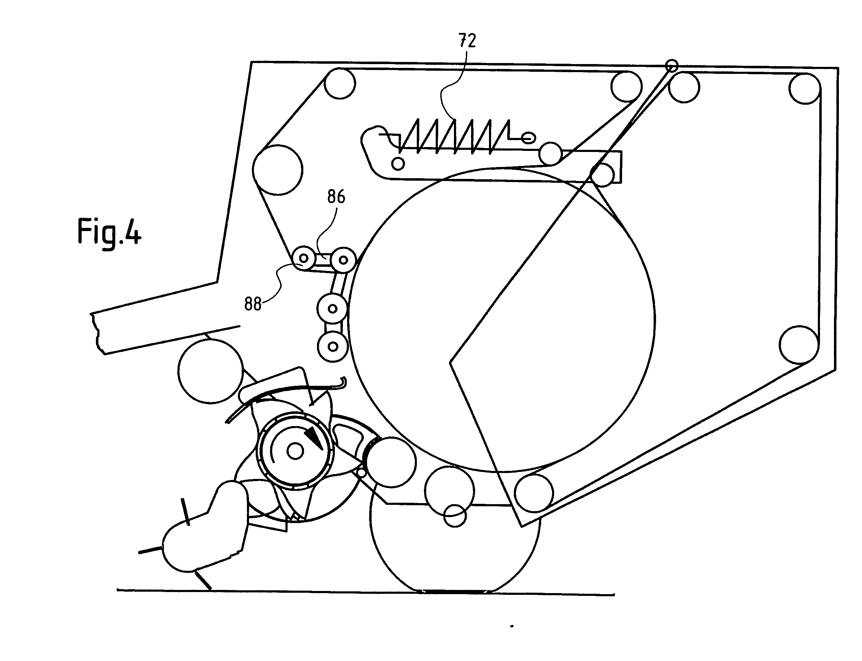

Die Figuren 3 und 4 zeigen ein Ausführungsbeispiel der Erfindung, das dem Ausführungsbeispiel nach den Figuren 1 und 2 weitestgehend entspricht und auch die gleiche Funktion aufweist. Allerdings weist der Träger 32 nach dem Ausführungsbeispiel in den Figuren 3 und 4 einen Arm 86 mit einer weiteren Walze 88 auf.

Der Arm 86 steht im wesentlichen rechtwinklig von dem Träger 32 ab und zwar in Richtung zu der vorderen unteren Umlenkrolle 36 in dem Rahmen 12. Der Arm 86 ist mit dem Träger 32 starr verbunden und zwar im Bereich der oberen Walze 34. Die Ausrichtung ist so gewählt, daß die von dem Arm 86 getragene Walze 88 stets an der Innenseite des Zugmittels 40 anliegt. Die Länge des Arms 86 ist so bemessen, daß sich ein Hebelarm ergibt, der beim Schwenken des Trägers 32 entgegen dem Uhrzeigerdrehsinn zu einer spürbaren zusätzlichen Auslenkung des Trums zwischen der beweglichen und der vorderen unteren Umlenkrolle 36 in dem Rahmen 12 führt. Aufgrund der Auslenkung dieses Trums wird die Spannung in dem Zugmittel 40 am Ende des Preß- oder Wickelvorgangs zusätzlich erhöht.

## Patentansprüche

1. Rundballenpresse (10) mit einem Preßraum (42), der von wenigstens einem endlosen Zugmittel (40), (84) und von Walzen (34) umgeben ist, wobei:
a) wenigstens drei Walzen (34) im Anschluß an einen Einlaß (58) zu dem Preßraum (42) auf einem Träger (32) angeordnet sind,
b) der Träger (32) um eine parallel zu den Walzen (34) verlaufende und zwischen seinen Enden angeordnete Schwenkachse (66) beweglich ist,
c) das Zugmittel (40) über die dem Einlaß (58) abgelegene Walze (34) verläuft und
d) wenigstens zwei der Walzen (34) von dem Erntegut beaufschlagbar sind.

2. Rundballenpresse nach Anspruch 1, **dadurch gekennzeichnet, daß** bei drei Walzen (34) der Träger (32) um die Drehachse der mittleren Walze (34) schwenkbar ist.

3. Rundballenpresse nach Anspruch 1 oder 2, **dadurch gekennzeichnet, daß** die von Erntegut beaufschlagbaren Walzen (34) einen größeren Durchmesser aufweisen als die von dem Zugmittel (40) umschlungene.

4. Rundballenpresse nach einem oder mehreren der vorherigen Ansprüche, **dadurch gekennzeichnet, daß** die Walzen (34) auf ihrer dem Preßraum (42) zugelegenen Seite auf einem Bogen enden.

5. Rundballenpresse nach einem oder mehreren der vorherigen Ansprüche, **dadurch gekennzeichnet, daß** der Träger (32) mit einem seitlich abstehenden Arm (86) zur drehbaren Aufnahme einer weiteren Walze (88) versehen ist, über die das Zugmittel (40) abläuft.

6. Rundballenpresse nach einem oder mehreren der vorherigen Ansprüche, **dadurch gekennzeichnet, daß** in den Einlaß (58) ein stromaufwärts des Einlasses (58) gelegener Rotor (52) ragt, der vorzugsweise ein Teil eines Schneidwerks (28) darstellt.

7. Rundballenpresse nach Anspruch 6, **dadurch gekennzeichnet, daß** der Rotor (52) oberschlächtig fördert.

8. Rundballenpresse nach Anspruch 7, **dadurch gekennzeichnet, daß** oberhalb des Rotors (52) Messer (54) angeordnet sind.

9. Rundballenpresse nach einem oder mehreren der vorherigen Ansprüche, **dadurch gekennzeichnet, daß** das Zugmittel (40), (84) von mehreren parallel zueinander verlaufenden Riemen gebildet wird.

10. Rundballenpresse nach einem oder mehreren der vorherigen Ansprüche, **dadurch gekennzeichnet, daß** zwei Satz Zugmittel (40), (84) vorgesehen sind.
